# EUROPEAN PATENT SPECIFICATION

(11) **EP 3 845 334 B1**
(45) Date of publication and mention of the grant of the patent: **22.11.2023**
(21) Application number: 19854909.9
(22) Date of filing: 26.04.2019
(51) Int. Cl.: B22F 9/00, B22F 9/24, C09D 11/326

(54) **AQUEOUS DISPERSION OF METAL FINE PARTICLES**
WÄSSRIGE DISPERSION VON METALLFEINPARTIKELN
DISPERSION AQUEUSE DE PARTICULES FINES MÉTALLIQUES

(30) Priority: 31.08.2018 JP 2018163820
(43) Date of publication of application: 07.07.2021
(73) Proprietor: Kao Corporation, Chuo-ku, Tokyo 103-8210 (JP)
(72) Inventor: YOSHIDA, Tomohide, Wakayama-shi, Wakayama 640-8580 (JP); TAKENO, Hirotaka, Wakayama-shi, Wakayama 640-8580 (JP)
(74) Representative: Hoffmann Eitle
(86) International application number: PCT/JP2019/017985
(87) International publication number: WO 2020/044662

(56) References cited:
- EP-A1- 2 444 148
- EP-A1- 2 821 164
- CN-A- 108 081 781
- JP-A- 2004 033 901
- JP-A- 2009 074 171
- JP-A- 2010 209 366
- JP-A- 2013 159 805
- JP-A- 2013 504 692
- JP-A- 2017 002 219
- JP-A- 2018 129 310
- US-A1- 2012 235 075

## Description

### FIELD OF THE INVENTION

The present invention relates to a water-based metal fine particle dispersion and a process for producing the water-based metal fine particle dispersion, a metallic printing ink containing the water-based metal fine particle dispersion, and a metallic printing method using the metallic printing ink.

### BACKGROUND OF THE INVENTION

Metal fine particles obtained by atomizing a metal into fine particles having a nano-order size are capable of exhibiting a variety of functions and properties upon use thereof, and it has been therefore expected that the metal fine particles are used in a wide variety of industrial applications.

In order to promote use of the metal fine particles in the industrial applications, various methods for production of the metal fine particles have been conventionally studied. For example, as the chemical methods for producing metal atoms, there are known wet methods such as the method in which metal ions eluted from a metal compound is reduced in a liquid, the method in which a metal atom is taken out from a metal complex by thermal decomposition of the metal complex, and the like. However, in the method using the metal complex, it has been required to conduct heat treatment under high temperature conditions, and the reducing liquid used for reducing the metal complex poses the problem concerning removal of residual organic substances, etc., therefrom. Therefore, studies on processes for production of the metal fine particles which have high industrial applicability have been made conventionally.

For example, JP 2017-2219A (Patent Literature 1) aims at providing a composition liquid for forming a silver mirror coating film layer from which a silver mirror coating film layer can be produced under ordinary temperature conditions, and which is free of occurrence of harmful components or corrosive by-products, etc., and discloses a composition liquid for forming a silver mirror coating film layer which is formed of a dispersion solution of silver nanoparticles, said composition liquid being obtained by irradiating an ultrasonic wave to an alcohol solution prepared by dissolving a polymer dispersant in an alcohol solvent and dispersing at least one silver compound selected from the group consisting of silver oxide and silver carbonate into the resulting solution, etc.

JP 2009-74171A (Patent Literature 2) aims at providing colloidal metal particles that contain a less amount of coarse particles and are excellent in long-term storage stability under the condition that metal nanoparticles are contained therein at a high concentration, etc., and discloses colloidal metal particles that are formed of metal nanoparticles and a protective colloid with which the metal nanoparticles are coated, in which the protective colloid is constituted of a carboxy group-containing organic compound and a polymer dispersant, etc.

EP 2 821 164 A1 (Patent Literature 3) describes a metallic nanoparticle dispersion comprising metallic nanoparticles characterized in that the dispersion comprises less than 50 µmol/g metal of an inorganic acid or a compound capable of generating such an acid during curing of a metallic layer or pattern formed from the dispersion.

CN 108081781 A (Patent Literature 4) describes a printing ink prepared by a method that comprises the following steps: weighing nano metal particles which is subjected to surface treatment and has the mass percent of 2 to 30 percent and dispersing the nano metal particles into a metal salt solution to form a uniform and stable solution containing the nano metal particles; adding a complexing agent which has the mass percent of 0.1 percent; then adding a dispersant or a stabilizer into a mixed solution obtained by step 1 according to surface tension of ink on a base material and requirements of printing equipment on viscosity, so as to prepare the printing ink. The printing method involves printing the in on a substrate; carrying out gradient baking and roasting on the substrate subjected to the inkjet printing until a solvent is completely volatilized; carrying out reduction reaction on metal ions in situ to from a dense metal solid, wherein the grain diameter of the nano metal particles is 5 to 500 nm.

EP 2 444 148 A1 (Patent Literature 5) describes a metal nanoparticles sol with a metal particle content of 1 g/liter, and that comprises silver nanoparticles, at least one dispersing auxiliary, at least one liquid dispersion medium, and at least one metal (0.1-10 wt.%, based on silver content of the metal nanoparticles sol) comprising ruthenium, rhodium, palladium, osmium, iridium or platinum, in the form of the metal or at least one metal compound.

US 2012/235075 A1 (Patent Literature 6) describes a solvent-based ink composition that comprises magnetic nanoparticles that are coated with various materials to prevent the exposure of the nanoparticles to oxygen.

JP 2013 504692 A (Patent Literature 7) describes a method for preparing an aqueous dispersion of metal nanoparticles whose surface is modified to have hydrophobic groups with hydrophilic groups.

JP 2004 033901 A (Patent Literature 8) describes a continuous production method for a metal colloidal solution that is carried out in a micro reactor by reducing a metallic compound in the presence of a polymer pigment dispersant.

JP 2010 209366 A (Patent Literature 9) describes a method for producing metal nanoparticles that includes: mixing a mixture containing a protective agent (1) for metal colloid and a metal compound with a mixture containing a protective agent (2) for metal colloid and a reducing agent to reduce the metal compound.

### SUMMARY OF THE INVENTION

The present invention relates to a water-based metal fine particle dispersion, containing metal fine particles (a) dispersed with a dispersant B, in which:
the dispersant B contains a vinyl-based polymer (b) containing a constitutional unit derived from a hydrophobic monomer (b-1), a constitutional unit derived from a carboxy group-containing monomer (b-2) and a constitutional unit derived from a polyalkylene glycol segment-containing monomer (b-3) in an amount of not less than 85% by mass;
the metal fine particles (a) have a cumulant average particle size of not less than 2 nm and not more than 50 nm wherein cumulant average particle size is measured using a laser particle analyzing system, where the measurement is conducted at 25°C using an angle between incident light and detector of 90° and a cumulative number of 100 times, wherein the refractive index of water (1.333) is input to the analyzing system as the refractive index of the dispersing medium, and wherein the concentration of the sample to be measured is controlled to be 5 × 10⁻³% by mass in terms of a solid content thereof,
a concentration of metal in the water-based metal fine particle dispersion is not less than 30% by mass and not more than 80% by mass; and
a mass ratio of the dispersant B to a sum of the dispersant B and the metal [dispersant B/(dispersant B + metal)] is not less than 0.01 and not more than 0.3.

### DETAILED DESCRIPTION OF THE INVENTION

However, in the technologies described in the Patent Literatures 1 and 2, the obtained dispersions have a low metal concentration, and if it is intended to obtain a dispersion having a high metal concentration, there tends to occur aggregation of the metal fine particles therein. In particular, metals such as silver, etc., having a large specific gravity exhibit poor dispersion stability, and it has been therefore difficult to obtain a water-based dispersion containing fine particles of these metals finely dispersed therein at a high concentration. In addition, when the metal fine particles are incorporated at a high concentration, the resulting dispersions tend to suffer from aggregation of the metal fine particles. Thus, the technologies described in the Patent Literatures 1 and 2 have failed to provide a water-based dispersion of the metal fine particles which has a sufficient storage stability.

The present invention aims at providing a water-based metal fine particle dispersion that contains metal fine particles finely dispersed therein at a high concentration and is excellent in storage stability and a process for producing the water-based metal fine particle dispersion, a metallic printing ink containing the water-based metal fine particle dispersion, and a metallic printing method using the ink.

The present inventors have noticed that when dispersing metal fine particles with a dispersant containing a predetermined amount of a vinyl-based polymer containing constitutional units derived from specific monomers, it is possible to well control aggregation of the metal dine particles, and have found that in such a case, it is possible obtain a water-based pigment dispersion that contains the metal fine particles finely dispersed therein at a high concentration, and is excellent in storage stability.

In accordance with the present invention, it is possible to provide a water-based metal fine particle dispersion that contains metal fine particles finely dispersed therein at a high concentration and is excellent in storage stability and a process for producing the water-based metal fine particle dispersion, a metallic printing ink containing the water-based metal fine particle dispersion, and a metallic printing method using the ink.

### [Water-Based Metal Fine Particle Dispersion]

The water-based metal fine particle dispersion of the present invention (hereinafter also referred to merely as a "metal fine particle dispersion" or a "dispersion") contains metal fine particles (a) dispersed with a dispersant B (hereinafter also referred to merely as "metal fine particles (a)"), in which the dispersant B contains a vinyl-based polymer (b) containing a constitutional unit derived from a hydrophobic monomer (b-1) (hereinafter also referred to merely as a "monomer (b-1)"), a constitutional unit derived from a carboxy group-containing monomer (b-2) (hereinafter also referred to merely as a "monomer (b-2)") and a constitutional unit derived from a polyalkylene glycol segment-containing monomer (b-3) (hereinafter also referred to merely as a "monomer (b-3)") (such a vinyl-based polymer (b) is hereinafter also referred to merely as a "polymer (b)") in an amount of not less than 85% by mass; the metal fine particles (a) have a cumulant average particle size of not less than 2 nm and not more than 50 nm; a concentration of metal in the metal fine particle dispersion is not less than 30% by mass and not more than 80% by mass; and a mass ratio of the dispersant B to a sum of the dispersant B and the metal [dispersant B/(dispersant B + metal)] is not less than 0.01 and not more than 0.3.

The metal fine particle dispersion of the present invention is obtained by dispersing the metal fine particles (a) in a water-based medium. In this case, the configuration of the metal fine particles (a) is not particularly limited, and the metal fine particles (a) may have any configuration as long as the particles are formed of at least metal fine particles and the dispersant B. Examples of the configuration of the metal fine particles (a) include the particle configuration in which the metal fine particles are enclosed in the dispersant B, the particle configuration in which the metal fine particles are uniformly dispersed in the dispersant B, the particle configuration in which the metal fine particles are exposed onto a surface of respective particles of the dispersant B, etc., as well as a mixture of these particle configurations.

Meanwhile, the term "water-based" as used in the present invention means that water has a largest content among components of the water-based medium.

According to the present invention, it is possible to obtain a metal fine particle dispersion that contains the metal fine particles finely dispersed therein at a high concentration, and is excellent in storage stability. The reason why the aforementioned advantageous effects can be attained by the present invention is considered as follows, though it is not clearly determined yet.

The metal fine particle dispersion of the present invention contains the metal fine particles dispersed with the dispersant, in which the dispersant contains the vinyl-based polymer (b) containing the constitutional unit derived from the hydrophobic monomer (b-1), the constitutional unit derived from the carboxy group-containing monomer (b-2) and the constitutional unit derived from the polyalkylene glycol segment-containing monomer (b-3) in an amount of not less than 85% by mass. The constitutional unit derived from the monomer (b-2) serves for imparting a capability of forming a coordinate bond with a metal to the polymer (b) by the carboxy group contained therein. The constitutional unit derived from the monomer (b-1) is unstable in the water-based medium owing to its hydrophobicity. However, the constitutional unit derived from the monomer (b-1) is aggregated on the surface of the metal to render it as stable as possible, and as a result, closely accumulated on the surface of the respective metal fine particles. In addition, the polyalkylene glycol segment contained in the constitutional unit derived from the monomer (b-3) is allowed to spread in the water-based medium, so that the metal fine particles are enhanced in dispersion stability owing to steric repulsion effect thereof. Thus, it is considered that the synergistic effect of these constitutional units acts for suppressing aggregation of the metal fine particles, so that it is possible to obtain the metal fine particle dispersion containing the metal fine particles finely dispersed therein at a high concentration, and the resulting metal fine particle dispersion can be improved in storage stability.

### <Metal>

Examples of the metal (metal atom) constituting the metal fine particles (a) include Group 4 transition metals such as titanium, zirconium, etc.; Group 5 transition metals such as vanadium, niobium, etc.; Group 6 transition metals such as chromium, molybdenum, tungsten, etc.; Group 7 transition metals such as manganese, technetium, rhenium, etc.; Group 8 transition metals such as iron, ruthenium, etc.; Group 9 transition metals such as cobalt, rhodium, iridium, etc.; Group 10 transition metals such as nickel, palladium, platinum, etc.; Group 11 transition metals such as copper, silver, gold, etc.; Group 12 transition metals such as zinc, cadmium, etc.; Group 13 metals such as aluminum, gallium, indium, etc.; Group 14 metals such as germanium, tin, lead, etc.; and the like. As the metal constituting the metal fine particles (a), a kind of metal may be used alone as a single metal, or two or more kinds of metals may be used in combination with each other in the form of an alloy. Among these metals, preferred are those transition metals belonging to Groups 4 to 11 in the 4th to 6th Periods of the Periodic Table, more preferred are noble metals such as copper, gold, silver, platinum, palladium, etc., even more preferred is at least one metal selected from the group consisting of gold, silver and copper, and further even more preferred is silver.

### <Dispersant B>

The dispersant B used in the present invention contains the vinyl-based polymer (b) containing the constitutional unit derived from the hydrophobic monomer (b-1), the constitutional unit derived from the carboxy group-containing monomer (b-2) and the constitutional unit derived from the polyalkylene glycol segment-containing monomer (b-3) in an amount of not less than 85% by mass. By using the dispersant B, it is possible to control aggregation of the metal fine particles in the water-based medium, enhance dispersion stability of the metal fine particles in the dispersion, allow the dispersion to include the finely dispersed metal fine particles at a high concentration, and further improve storage stability of the dispersion.

### (Vinyl-Based Polymer (b))

The polymer (b) is produced by copolymerizing a raw material monomer containing the hydrophobic monomer (b-1), the carboxy group-containing monomer (b-2) and the polyalkylene glycol segment-containing monomer (b-3) (hereinafter also referred to merely as a "raw material monomer").

The polymer (b) may be in the form of any of a block copolymer, a random copolymer and an alternating copolymer.

### [Hydrophobic Monomer (b-1)]

The monomer (b-1) is used as a monomer component of the polymer (b) from the viewpoint of atomizing the metal fine particles and increasing a concentration of the metal fine particles in the dispersion as well as from the viewpoint of improving storage stability of the dispersion.

The term "hydrophobic" as used in the present invention means that a solubility in water of the monomer as measured by dissolving the monomer in 100 g of ion-exchanged water at 25°C until reaching a saturation concentration thereof is less than 10 g. The solubility in water of the monomer (b-1) is preferably not more than 5 g and more preferably not more than 1 g from the viewpoint of atomizing the metal fine particles and increasing a concentration of the metal fine particles in the dispersion as well as from the viewpoint of improving storage stability of the dispersion.

The monomer (b-1) is preferably at least one monomer selected from the group consisting of an aromatic group-containing monomer, and a (meth)acrylate containing a hydrocarbon group derived from an aliphatic alcohol.

The term "(meth)acrylate" as used in the present invention means at least one compound selected from the group consisting of an acrylate and a methacrylate, and the "(meth)acrylate" is hereinafter also defined in the same way.

The aromatic group-containing monomer is preferably a vinyl monomer containing an aromatic group having not less than 6 and not more than 22 carbon atoms which may contain a substituent group containing a hetero atom, and more preferably at least one monomer selected from the group consisting of a styrene-based monomer and an aromatic group-containing (meth)acrylate. The molecular weight of the aromatic group-containing monomer is preferably less than 500.

Examples of the styrene-based monomer include styrene, *α*-methyl styrene, 2-methyl styrene, 4-vinyl toluene (4-methyl styrene), divinyl benzene and the like. Among these styrene-based monomers, preferred are styrene and *α*-methyl styrene.

As the aromatic group-containing (meth)acrylate, preferred are phenyl (meth)acrylate, benzyl (meth)acrylate, phenoxyethyl (meth)acrylate, etc., and more preferred is benzyl (meth)acrylate.

As the (meth)acrylate containing a hydrocarbon group derived from an aliphatic alcohol, preferred are those (meth)acrylates containing a hydrocarbon group derived from an aliphatic alcohol having not less than 1 and not more than 22 carbon atoms. Examples of the (meth)acrylates containing a hydrocarbon group derived from an aliphatic alcohol having not less than 1 and not more than 22 carbon atoms include (meth)acrylates containing a linear alkyl group, such as methyl (meth)acrylate, ethyl (meth)acrylate, propyl (meth)acrylate, butyl (meth)acrylate, pentyl (meth)acrylate, octyl (meth)acrylate, decyl (meth)acrylate, dodecyl (meth)acrylate, stearyl (meth)acrylate, etc.; (meth)acrylates containing a branched alkyl group, such as isopropyl (meth)acrylate, isobutyl (meth)acrylate, *tert*-butyl (meth)acrylate, isopentyl (meth)acrylate, isooctyl (meth)acrylate, isodecyl (meth)acrylate, isododecyl (meth)acrylate, isostearyl (meth)acrylate, 2-ethylhexyl (meth)acrylate, etc.; (meth)acrylates containing an alicyclic alkyl group, such as cyclohexyl (meth)acrylate, etc.; and the like. Of these (meth)acrylates, more preferred are those (meth)acrylates containing an alkyl group having not less than 6 and not more than 10 carbon atoms.

These monomers (b-1) may be used alone or in combination of any two or more thereof.

As the monomer (b-1), from the viewpoint of atomizing the metal fine particles and increasing a concentration of the metal fine particles in the dispersion as well as from the viewpoint of improving storage stability of the dispersion, preferred is the aromatic group-containing monomer, more preferred is the styrene-based monomer, even more preferred is at least one monomer selected from the group consisting of styrene, *α*-methyl styrene, 2-methyl styrene and 4-vinyl toluene (4-methyl styrene), and further even more preferred is at least one monomer selected from the group consisting of styrene and *α*-methyl styrene.

### [Carboxy Group-Containing Monomer (b-2)]

The monomer (b-2) is used as a monomer component of the polymer (b) from the viewpoint of atomizing the metal fine particles and increasing a concentration of the metal fine particles in the dispersion as well as from the viewpoint of improving storage stability of the dispersion. The carboxy group contained in the monomer (b-2) includes a carboxy group (-COOM) which is capable of releasing hydrogen ions upon dissociation thereof to exhibit acidity or a dissociated ion form (-COO⁻) of the carboxy group, and the like. In the aforementioned chemical formula, M is a hydrogen atom, an alkali metal, ammonium or an organic ammonium.

Specific examples of the monomer (b-2) include unsaturated monocarboxylic acids such as (meth)acrylic acid, crotonic acid, 2-methacryloyloxymethylsuccinic acid, etc.; unsaturated dicarboxylic acids such as maleic acid, itaconic acid, fumaric acid, citraconic acid, etc.; and the like. Incidentally, the aforementioned unsaturated dicarboxylic acids may be in the form of an acid hydride.

In addition, these monomers (b-2) may be used alone or in combination of any two or more thereof.

The monomer (b-2) is preferably at least one monomer selected from the group consisting of (meth)acrylic acid and maleic acid from the viewpoint of atomizing the metal fine particles and increasing a concentration of the metal fine particles in the dispersion as well as from the viewpoint of improving storage stability of the dispersion.

The term "(meth)acrylic acid" as used in the present invention means at least one compound selected from the group consisting of acrylic acid and methacrylic acid, and the "(meth)acrylic acid" is hereinafter defined in the same way.

### [Polyalkylene Glycol Segment-Containing Monomer (b-3)]

The monomer (b-3) is used as a monomer component of the polymer (b) from the viewpoint of atomizing the metal fine particles and increasing a concentration of the metal fine particles in the dispersion as well as from the viewpoint of improving storage stability of the dispersion.

The monomer (b-3) is preferably a monomer that is capable of introducing a polyalkylene glycol segment into the polymer (b) as a side chain of the polymer (b) from the viewpoint of atomizing the metal fine particles and increasing a concentration of the metal fine particles in the dispersion as well as from the viewpoint of improving storage stability of the dispersion. Examples of such a monomer include a polyalkylene glycol (meth)acrylate, an alkoxy polyalkylene glycol (meth)acrylate, a phenoxy polyalkylene glycol (meth)acrylate and the like. These monomers (b-3) may be used alone or in combination of any two or more thereof.

As the monomer (b-3), preferred is at least one monomer selected from the group consisting of a polyalkylene glycol (meth)acrylate and an alkoxy polyalkylene glycol (meth)acrylate, and more preferred is an alkoxy polyalkylene glycol (meth)acrylate. The number of carbon atoms in an alkoxy group of the alkoxy polyalkylene glycol (meth)acrylate is preferably not less than 1 and not more than 8, and more preferably not less than 1 and not more than 4.

Examples of the alkoxy polyalkylene glycol (meth)acrylate include methoxy polyalkylene glycol (meth)acrylates, ethoxy polyalkylene glycol (meth)acrylates, propoxy polyalkylene glycol (meth)acrylates, butoxy polyalkylene glycol (meth)acrylates, octoxy polyalkylene glycol (meth)acrylates and the like.

The polyalkylene glycol segment of the monomer (b-3) preferably contains a unit derived from an alkyleneoxide having not less than 2 and not more than 4 carbon atoms. Examples of the aforementioned alkyleneoxide include ethyleneoxide, propyleneoxide, butyleneoxide and the like.

The number of the units derived from the alkyleneoxide in the aforementioned polyalkylene glycol segment is preferably not less than 2, more preferably not less than 5 and even more preferably not less than 10, and is also preferably not more than 100, more preferably not more than 70 and even more preferably not more than 50.

The aforementioned polyalkylene glycol segment is preferably a copolymer containing a unit derived from ethyleneoxide and a unit derived from propyleneoxide from the viewpoint of atomizing the metal fine particles and increasing a concentration of the metal fine particles in the dispersion as well as from the viewpoint of improving storage stability of the dispersion. The molar ratio of the ethyleneoxide unit (EO) to the propyleneoxide unit (PO) [EO/PO] is preferably not less than 60/40, more preferably not less than 65/35 and even more preferably not less than 70/30, and is also preferably not more than 90/10, more preferably not more than 85/15 and even more preferably not more than 80/20.

The copolymer containing the unit derived from ethyleneoxide and the unit derived from propyleneoxide may be in the form of any of a block copolymer, a random copolymer and an alternating copolymer.

Specific examples of commercially available products of the monomer (b-3) include "NK ESTER AM-90G", "NK ESTER AM-130G", "NK ESTER AMP-20GY", "NK ESTER AM-230G", "NK ESTER M-20G", "NK ESTER M-40G", "NK ESTER M-90G", "NK ESTER M-230G" and the like as products available from Shin-Nakamura Chemical Co., Ltd.; and "BLEMMER PE-90", "BLEMMER PE-200", "BLEMMER PE-350" and the like, "BLEMMER PME-100", "BLEMMER PME-200", "BLEMMER PME-400", "BLEMMER PME-1000", "BLEMMER PME-4000" and the like, "BLEMMER PP-500", "BLEMMER PP-800", "BLEMMER PP-1000" and the like, "BLEMMER AP-150", "BLEMMER AP-400", "BLEMMER AP-550" and the like, and "BLEMMER 50PEP-300", "BLEMMER 50POEP-800B", "BLEMMER 43PAPE-600B" and the like as products available from NOF Corporation.

### (Contents of Respective Monomer Components in Raw Material Monomer or Contents of Respective Constitutional Units in Polymer (b))

The contents of the aforementioned monomers (b-1) to (b-3) in the raw material monomer (contents of non-neutralized components; hereinafter defined in the same way) upon production of the polymer (b), or the contents of the constitutional units derived from the monomers (b-1) to (b-3) in the polymer (b), are as follows, from the viewpoint of atomizing the metal fine particles and increasing a concentration of the metal fine particles in the dispersion as well as from the viewpoint of improving storage stability of the dispersion.

The content of the monomer (b-1) is preferably not less than 50 mol%, more preferably not less than 60 mol% and even more preferably not less than 65 mol%, and is also preferably not more than 90 mol%, more preferably not more than 85 mol% and even more preferably not more than 80 mol%.

The content of the monomer (b-2) is preferably not less than 5 mol%, more preferably not less than 10 mol% and even more preferably not less than 15 mol%, and is also preferably not more than 40 mol%, more preferably not more than 35 mol% and even more preferably not more than 30 mol%.

The content of the monomer (b-3) is preferably not less than 1 mol%, more preferably not less than 5 mol% and even more preferably not less than 7 mol%, and is also preferably not more than 30 mol%, more preferably not more than 20 mol% and even more preferably not more than 15 mol%.

The polymer (b) preferably contains a constitutional unit derived from a styrene-based monomer as the monomer (b-1), a constitutional unit derived from (meth)acrylic acid and maleic acid as the monomer (b-2), and a constitutional unit derived from an alkoxy polyalkylene glycol (meth)acrylate as the monomer (b-3).

As the polymer (b), there may be used either a synthesized product obtained by conventionally known methods or a commercially available product. Examples of the commercially available product of the polymer (b) include "DISPERBYK-2015" and "DISPERBYK-190" available from BYK Chemie GmbH, and the like.

The number-average molecular weight of the polymer (b) is preferably not less than 1,000, more preferably not less than 2,000 and even more preferably not less than 3,000, and is also preferably not more than 100,000, more preferably not more than 50,000, even more preferably not more than 30,000, further even more preferably not more than 10,000 and still further even more preferably not more than 7,000. When the number-average molecular weight of the polymer (b) lies within the aforementioned range, adsorption of the polymer (b) onto the metal fine particles is sufficient, so that the metal fine particles can exhibit good dispersion stability in the dispersion. The number-average molecular weight may be measured by the method described in Examples below.

The acid value of the polymer (b) is preferably not less than 5 mgKOH/g, more preferably not less than 10 mgKOH/g and even more preferably not less than 20 mgKOH/g, and is also preferably not more than 200 mgKOH/g, more preferably not more than 100 mgKOH/g, even more preferably not more than 50 mgKOH/g and further even more preferably not more than 30 mgKOH/g.

The acid value of the polymer (b) may be measured by the method described in Examples below.

The dispersant B may also contain a dispersant other than the polymer (b). As the other dispersant, there may be mentioned a polymer dispersant other than the polymer (b), a low-molecular weight dispersant containing a carboxy group, and the like.

Examples of the polymer dispersant other than the polymer (b) include polymer dispersants containing a nonionic group such as a hydroxy group, an amino group, an amide group, an oxyalkylene group, etc.; polymer dispersants containing an anionic group such as a carboxy group, a sulfonic group, a phosphoric group, etc.; and the like.

Specific examples of the polymer dispersants containing a nonionic group include polyvinyl alcohol, polyvinyl pyrrolidone, polyallylamine, polyethyleneimine, polyacrylamide and the like.

Specific examples of the polymer dispersants containing an anionic group include condensation-based polymers such as polyurethanes, polyesters, etc.; vinyl-based polymers such as acrylic resins, styrene-based resins, styrene-acrylic resins, acrylic silicone-based resins, etc.; and the like.

It is preferred that the number-average molecular weight of the polymer dispersant other than the polymer (b), preferably the number-average molecular weight of the polymer dispersant containing an anionic group such as a carboxy group, etc., or the polymer dispersant containing a nonionic group, lies within the same range as that of the number-average molecular weight of the polymer (b). The number-average molecular weight of the aforementioned polymer dispersant other than the polymer (b) may also be measured by the method described in Examples below, similarly to the number-average molecular weight of the polymer (b).

Examples of the low-molecular weight dispersant include aliphatic (poly)carboxylic acids having not less than 1 and not more than 24 carbon atoms, aliphatic hydroxycarboxylic acids having not less than 2 and not more than 34 carbon atoms, and the like.

The molecular weight of the low-molecular weight dispersant is preferably not less than 100 and more preferably not less than 200, and is also preferably less than 1,000, more preferably not more than 800 and even more preferably not more than 600.

The dispersants other than the polymer (b) may be either an appropriately synthesized product or a commercially available product.

The content of the polymer (b) in the dispersant B is not less than 85% by mass, preferably not less than 90% by mass and more preferably not less than 95% by mass, and is also preferably not more than 100% by mass, and even more preferably 100% by mass, from the viewpoint of atomizing the metal fine particles and increasing a concentration of the metal fine particles in the dispersion as well as from the viewpoint of improving storage stability of the dispersion.

Examples of the configuration of the dispersant B which is present in the metal fine particle dispersion include the configuration in which the dispersant B is adsorbed onto the respective metal fine particles, the configuration in which the metal fine particles are incorporated in the dispersant B, i.e., the metal fine particles are enclosed (encapsulated) in the dispersant B, and the configuration in which the dispersant B is not adsorbed onto the respective metal fine particles. From the viewpoint of improving dispersion stability of the metal fine particles, among these configurations, preferred is the configuration in which the metal fine particles are incorporated in the dispersant B, and more preferred is the metal fine particle-enclosing configuration in which the metal fine particles are enclosed in the dispersant B.

The mass ratio of the dispersant B to a sum of the dispersant B and the metal [dispersant B/(dispersant B + metal)] in the metal fine particle dispersion is not less than 0.01, more preferably not less than 0.03 and even more preferably not less than 0.05 from the viewpoint of atomizing the metal fine particles, and is also not more than 0.3, more preferably not more than 0.2 and even more preferably not more than 0.1 from the viewpoint of improving dispersion stability of the metal fine particles in the dispersion and storage stability of the dispersion as well as from the viewpoint of increasing a concentration of the metal fine particles in the dispersion.

The aforementioned mass ratio [dispersant B/(dispersant B + metal)] is calculated from masses of the dispersant B and the metal which are measured by the method described in Examples below using a simultaneous thermogravimetric and differential thermal analyzer (TG/DTA).

In the case where the polymer (b) is used as the dispersant B, the mass ratio of the polymer (b) to a sum of the polymer (b) and the metal [polymer (b)/(polymer (b) + metal)] in the metal fine particle dispersion is not less than 0.01, more preferably not less than 0.03 and even more preferably not less than 0.05 from the viewpoint of atomizing the metal fine particles, and is also not more than 0.3, more preferably not more than 0.2 and even more preferably not more than 0.1 from the viewpoint of improving dispersion stability of the metal fine particles in the dispersion and storage stability of the dispersion as well as from the viewpoint of increasing a concentration of the metal fine particles in the dispersion.

The aforementioned mass ratio [polymer (b)/ (polymer (b) + metal)] may be calculated by the same method as described above as to the mass ratio [dispersant B/(dispersant B + metal)].

In the case where the metal constituting the metal fine particles (a) is silver, i.e., in the case where the metal fine particle dispersion is the silver fine particle dispersion, the mass ratio of the dispersant B to a sum of the dispersant B and silver [dispersant B/(dispersant B + silver)] in the silver fine particle dispersion is not less than 0.01, more preferably not less than 0.03 and even more preferably not less than 0.05 from the viewpoint of atomizing the silver fine particles, and is also not more than 0.3, more preferably not more than 0.2 and even more preferably not more than 0.1 from the viewpoint of improving dispersion stability of the silver fine particles in the dispersion and storage stability of the dispersion as well as from the viewpoint of increasing a concentration of the silver fine particles in the dispersion. The aforementioned mass ratio [dispersant B/(dispersant B + silver)] is calculated from masses of the dispersant B and the metal (silver) which are measured by the method described in Examples below using a simultaneous thermogravimetric and differential thermal analyzer (TG/DTA), similarly to the aforementioned mass ratio [dispersant B/(dispersant B + metal)].

The cumulant average particle size of the metal fine particles (a) in the metal fine particle dispersion is not less than 2 nm, preferably not less than 5 nm, more preferably not less than 10 nm, even more preferably not less than 15 nm and further even more preferably not less than 20 nm from the viewpoint of improving dispersion stability of the metal fine particles in the dispersion and storage stability of the dispersion as well as from the viewpoint of increasing a concentration of the metal fine particles in the dispersion, and is also not more than 50 nm, preferably not more than 40 nm and more preferably not more than 30 nm from the viewpoint of atomizing the metal fine particles.

Incidentally, the aforementioned cumulant average particle size may be measured by the method described in Examples below.

The concentration of the metal in the metal fine particle dispersion is not less than 30% by mass, preferably not less than 35% by mass, more preferably not less than 40% by mass and even more preferably not less than 45% by mass from the viewpoint of facilitating preparation of the below-mentioned ink, and is also not more than 80% by mass, preferably not more than 70% by mass, more preferably not more than 60% by mass and even more preferably not more than 50% by mass from the viewpoint of improving dispersion stability of the metal fine particles in the dispersion and storage stability of the dispersion.

Incidentally, the concentration of the metal in the metal fine particle dispersion may be calculated by the method described in Examples below.

### [Process for Producing Water-Based Metal Fine Particle Dispersion]

The metal fine particle dispersion of the present invention is preferably produced by the method in which a metal raw material compound A containing the metal constituting the metal fine particles (a) is reduced in a water-based solvent C in the presence of the dispersant B. It is considered that the dispersant B present in the reaction system is coordinated and adsorbed to metal ions, so that the metal ions are reduced by reduction reaction to thereby form the metal fine particles (a). The reduction reaction of the metal raw material compound A is preferably conducted by using a reducing agent D from the viewpoint of atomizing the metal fine particles and increasing a concentration of the metal fine particles in the dispersion as well as from the viewpoint of improving storage stability of the dispersion, whereby it is possible to obtain the atomized metal fine particles (a) with a high yield.

The method of mixing the metal raw material compound A, the dispersant B, the water-based solvent C and the reducing agent D with each other is not particularly limited. For example, there may be mentioned the method I in which a mixed solution IA containing the metal raw material compound A, the dispersant B and the water-based solvent C is mixed with the reducing agent D (method I), the method in which a mixed solution IIA containing the dispersant B and the reducing agent D is mixed with a mixed solution IIB containing the metal raw material compound A and the water-based solvent C (method II), and the like. Among these methods, from the viewpoint of atomizing the metal fine particles and increasing a concentration of the metal fine particles in the dispersion as well as from the viewpoint of improving storage stability of the dispersion, the method I is preferably used.

The method I includes the step 1 of mixing the mixed solution IA containing the metal raw material compound A, the dispersant B and the water-based solvent C with the reducing agent D (hereinafter also referred to merely the "step 1"). The mixed solution IA may be obtained by mixing the metal raw material compound A, the dispersant B and the water-based solvent C with each other by conventionally known methods.

### (Step 1)

### <Metal Raw Material Compound A>

The metal raw material compound A is not particularly limited as long as it is a compound containing the aforementioned metal. Examples of the metal raw material compound A include metal salts of inorganic acids or organic acids, metal oxides, metal hydroxides, metal sulfides, metal halides and the like. Specific examples of the aforementioned metal salts include metal salts of inorganic acids such as nitric acid salts, nitrous acid salts, sulfuric acid salts, carbonic acid salts, ammonium salts, perchloric acid salts, etc.; metal salts of organic acids such as acetic acid salts, etc.; and the like. These metal raw material compounds A may be used alone or in the form of a mixture of any two or more thereof. Among these metal raw material compounds A, preferred is at least one compound selected from the group consisting of metal salts of inorganic acids or organic acids, and metal oxides; more preferred are metal salts of inorganic acids; even more preferred are metal salts of nitric acid; and further even more preferred is silver nitrate.

### <Water-Based Solvent C>

The water-based solvent C preferably contains water as a main component, and may further contain an organic solvent. Examples of the organic solvent include aliphatic alcohols having not less than 1 and not more than 4 carbon atoms, such as ethanol, 2-propanol, etc.; ketones having not less than 3 and not more than 8 carbon atoms, such as acetone, etc.; ethers such as tetrahydrofuran, etc.; and the like.

The content of water in the water-based solvent C is preferably not less than 60% by mass, more preferably not less than 70% by mass, even more preferably not less than 90% by mass and further even more preferably not less than 95% by mass from the viewpoint of improving environmental properties.

### (Contents of Respective Components in Mixed Solution IA)

The content of the metal raw material compound A in the mixed solution IA is preferably not less than 20% by mass, more preferably not less than 30% by mass, even more preferably not less than 35% by mass, further even more preferably not less than 40% by mass and still further even more preferably not less than 45% by mass from the viewpoint of increasing a concentration of the metal fine particles in the dispersion, and is also preferably not more than 90% by mass, more preferably not more than 80% by mass, even more preferably not more than 70% by mass, further even more preferably not more than 60% by mass and still further even more preferably not more than 55% by mass from the viewpoint of atomizing the metal fine particles and improving storage stability of the dispersion.

The content of the dispersant B in the mixed solution IA is preferably not less than 0.5% by mass, more preferably not less than 1% by mass and even more preferably not less than 2% by mass from the viewpoint of atomizing the metal fine particles, and is also preferably not more than 10% by mass, more preferably not more than 7% by mass, even more preferably not more than 5% by mass and further even more preferably not more than 4% by mass from the viewpoint of improving dispersion stability of the metal fine particles in the dispersion and storage stability of the dispersion as well as from the viewpoint of increasing a concentration of the metal fine particles in the dispersion.

The content of the water-based solvent C in the mixed solution IA is preferably not less than 5% by mass, more preferably not less than 20% by mass, even more preferably not less than 30% by mass and further even more preferably not less than 40% by mass, and is also preferably not more than 70% by mass, more preferably not more than 60% by mass and even more preferably not more than 50% by mass, from the viewpoint of atomizing the metal fine particles and increasing a concentration of the metal fine particles in the dispersion as well as from the viewpoint of improving storage stability of the dispersion.

<Reducing Agent D>

The reducing agent D used herein is not particularly limited, and may be either an inorganic reducing agent or an organic reducing agent.

Examples of the organic reducing agent include aliphatic amines, e.g., alkanolamines such as ethanolamine, *N*-methyl ethanolamine, *N*,*N*-dimethyl ethanolamine (2-(dimethylamino)ethanol), *N*,*N*-diethyl ethanolamine, diethanolamine, *N*-methyl diethanolamine, triethanolamine, propanolamine, *N*,*N-*dimethyl propanolamine, butanolamine, hexanolamine, etc., alkylamines such as propylamine, butylamine, hexylamine, diethylamine, dipropylamine, dimethylethylamine, diethylmethylamine, triethylamine, etc., and (poly)alkylene polyamines such as ethylenediamine, triethylenediamine, tetramethylethylenediamine, diethylenetriamine, dipropylenetriamine, triethylenetetramine, tetraethylenepentamine, etc.; alicyclic amines such as piperidine, pyrrolidine, *N*-methyl pyrrolidine, morpholine, etc.; aromatic amines such as aniline, *N*-methyl aniline, toluidine, anisidine, phenetidine, etc.; amines, e.g., aralkyl amines such as benzylamine, *N*-methyl benzylamine, etc.; alcohols such as ethylene glycol, propylene glycol, etc.; aldehydes such as formaldehyde, acetaldehyde, propionaldehyde, etc.; acids such as ascorbic acid, citric acid, etc., and salts thereof, and the like.

Examples of the inorganic reducing agent include boron hydride salts such as sodium boron hydride, ammonium boron hydride, etc.; aluminum hydride salts such as lithium aluminum hydride, potassium aluminum hydride, etc.; hydrazines such as hydrazine, hydrazine carbonate, etc.; hydrogen gas; and the like.

Incidentally, these reducing agents D may be used alone or in combination of any two or more thereof.

From the viewpoint of atomizing the metal fine particles and increasing a concentration of the metal fine particles in the dispersion as well as from the viewpoint of improving storage stability of the dispersion, the reducing agent D is preferably the organic reducing agent, more preferably amines, even more preferably an alkanol amine having not less than 2 and not more than 6 carbon atoms, further even more preferably a tertiary alkanol amine having not less than 2 and not more than 6 carbon atoms, and still further even more preferably *N*,*N*-dimethyl ethanolamine.

The method of mixing the mixed solution IA and the reducing agent D is not particularly limited. From the viewpoint of well controlling the reduction reaction, preferred is the method of adding the reducing agent D to the mixed solution IA, and more preferred is the method of adding dropwise the reducing agent D to the mixed solution IA. The dropping velocity of the reducing agent D may be appropriately adjusted according to a scale of production of the dispersion.

The reduction reaction is preferably conducted in a temperature range of preferably not lower than 10°C, more preferably not lower than 20°C and even more preferably not lower than 30°C, and also preferably not higher than 70°C, more preferably not higher than 60°C and even more preferably not higher than 50°C. The reduction reaction may be conducted in atmospheric air or in an atmosphere of inert gas such as nitrogen gas, etc.

### (Amounts of Respective Components Charged)

The amounts of the respective components charged upon production of the metal fine particle dispersion are as follows from the viewpoint of atomizing the metal fine particles and increasing a concentration of the metal fine particles in the dispersion as well as from the viewpoint of improving storage stability of the dispersion.

The amount of the metal raw material compound A charged on the basis of a total amount of the metal raw material compound A, the dispersant B, the water-based solvent C and the reducing agent D charged is preferably not less than 10% by mass, more preferably not less than 15% by mass and even more preferably not less than 20% by mass, and is also preferably not more than 60% by mass, more preferably not more than 50% by mass and even more preferably not more than 40% by mass.

The amount of the dispersant B charged on the basis of a total amount of the metal raw material compound A, the dispersant B, the water-based solvent C and the reducing agent D charged is preferably not less than 0.5% by mass, more preferably not less than 1% by mass and even more preferably not less than 1.5% by mass, and is also preferably not more than 7% by mass, more preferably not more than 5% by mass and even more preferably not more than 3% by mass.

The amount of the water-based solvent C charged on the basis of a total amount of the metal raw material compound A, the dispersant B, the water-based solvent C and the reducing agent D charged is preferably not less than 10% by mass, more preferably not less than 15% by mass and even more preferably not less than 20% by mass, and is also preferably not more than 40% by mass, more preferably not more than 35% by mass and even more preferably not more than 30% by mass.

The amount of the reducing agent D charged on the basis of a total amount of the metal raw material compound A, the dispersant B, the water-based solvent C and the reducing agent D charged is preferably not less than 20% by mass, more preferably not less than 30% by mass and even more preferably not less than 40% by mass, and is also preferably not more than 70% by mass, more preferably not more than 60% by mass and even more preferably not more than 50% by mass.

The molar ratio of the reducing agent D charged to the metal raw material compound A charged [reducing agent D/metal raw material compound A] is preferably not less than 0.5, more preferably not less than 1, even more preferably not less than 1.5, further even more preferably not less than 2 and still further even more preferably not less than 2.5, and is also preferably not more than 10, more preferably not more than 7, even more preferably not more than 5 and further even more preferably not more than 4.

The metal fine particle dispersion of the present invention may also contain glycerin or triethylene glycol, etc., as a humectant for preventing drying of the dispersion in an amount of not less than 1% by mass and not more than 10% by mass according to the applications thereof, and may further contain various additives such as mildew-proof agent, etc. The additives may be compounded either upon conducting the reduction reaction or after obtaining the metal fine particle dispersion.

### (Step 2)

The production process of the present invention preferably includes the step 2 of purifying the metal fine particle dispersion obtained in the step 1 (hereinafter also referred to merely as the "step 2") from the viewpoint of removing impurities from the dispersion, improving dispersion stability of the metal fine particles in the dispersion, and improving storage stability of the dispersion.

The dispersion obtained after the reduction reaction of the metal raw material compound A contains impurities such as the unreacted reducing agent, counter ions of the metal ions, a surplus of the dispersant B that has no contribution to dispersion of the metal fine particles, etc. For this reason, by conducting the production process via the step 2, it is possible to remove these impurities from the resulting dispersion.

The method of purifying the metal fine particle dispersion is not particularly limited, and there may be used various methods including membrane treatment such as dialysis, ultrafiltration, etc.; centrifugal separation treatment; and the like. Among these methods, from the viewpoint of efficiently removing the impurities from the dispersion, preferred is the membrane treatment, and more preferred is dialysis. As a material of a dialysis membrane used in the dialysis, there is preferably used a regenerated cellulose.

The molecular weight cutoff of the dialysis membrane is preferably not less than 1,000, more preferably not less than 5,000 and even more preferably not less than 10,000, and is also preferably not more than 100,000 and more preferably not more than 70,000, from the viewpoint of efficiently removing the impurities from the resulting dispersion.

The dialysis treatment may be conducted, for example, by the method in which the metal fine particle dispersion obtained in the step 1 is charged into a cylindrical dialysis tube, followed by closing both ends of the tube; and then the tube is placed in a container filled with a large amount of ion-exchanged water as a buffer, and the dispersion is allowed to stand therein for a predetermined period of time. By conducting the dialysis treatment, it is possible to remove impurity ions having a formula weight not more than the molecular weight cutoff or the dispersant having a molecular weight not more than the molecular weight cutoff from the metal fine particle dispersion.

The temperature used in the dialysis treatment is preferably not lower than 10°C, more preferably not lower than 15°C and even more preferably not lower than 20°C, and is also preferably not higher than 60°C, more preferably not higher than 50°C and even more preferably not higher than 40°C, from the viewpoint of improving efficiency of the dialysis treatment.

### (Step 3)

The production process of the present invention preferably further includes the step 3 of concentrating the metal fine particle dispersion obtained in the step 1 or the step 2.

The method of concentrating the metal fine particle dispersion is not particularly limited, and any suitable method can be used as long as it is capable of removing the water-based medium contained in the metal fine particle dispersion. Among them, there is preferably use the method of removing the water-based medium by distillation under heating or under reduced pressure. The heating temperature used in the method is preferably not lower than 35°C, more preferably not lower than 45°C and even more preferably not lower than 55°C from the viewpoint of enhancing productivity of the dispersion, and is also preferably not higher than 85°C, more preferably not higher than 75°C and even more preferably not higher than 65°C from the viewpoint of improving dispersion stability of the metal fine particles in the dispersion and suppressing thermal decomposition of the metal fine particles, etc. The concentration of the metal fine particle dispersion is preferably conducted while controlling the solid content of the dispersion to a desired range.

In the case where the water-based solvent C contains an organic solvent, it is preferred that the organic solvent is removed together with water in the step 3. The organic solvent is preferably substantially completely removed from the metal fine particle dispersion thus obtained in the step 3. However, the residual organic solvent may be present in the metal fine particle dispersion unless the objects and advantageous effects of the present invention are adversely affected by the residual organic solvent. The content of the residual organic solvent in the metal fine particle dispersion is preferably not more than 0.1% by mass and more preferably not more than 0.01% by mass.

The metal fine particle dispersion of the present invention contains the metal fine particles finely dispersed therein at a high concentration and is excellent in storage stability, and therefore can be used in extensive applications. Examples of the applications of the metal fine particle dispersion include various inks; conductive materials such as wiring materials, electrode materials, MLCC (laminated ceramic condenser), etc.; bonding materials such as solders, etc.; various sensors; antennas such as automatic identification technique (RFID: radio frequency identifier) tags using short-range radio communication, etc.; catalysts; optical materials; medical materials; and the like.

### [Metallic Printing Ink]

The metal fine particle dispersion of the present invention is preferably used as a metallic printing ink by incorporating the metal fine particle dispersion in a water-based ink (hereinafter also referred to merely as a "water-based ink" or an "ink"). Since the metal fine particle dispersion is excellent in dispersion stability of the metal fine particles (a) therein, the resulting water-based ink can be improved in storage stability.

The water-based ink preferably further contains an organic solvent from the viewpoint of improving storage stability of the water-based ink as well as from the viewpoint of improving ejection stability of the water-based ink when using an ink-jet printing method as the below-mentioned printing method. The organic solvent preferably contains one or more organic solvents having a boiling point of not lower than 90°C. The weighted mean value of boiling points of the organic solvents is preferably not lower than 150°C and more preferably not lower than 180°C, and is also preferably not higher than 240°C, more preferably not higher than 220°C and even more preferably not higher than 200°C.

Examples of the aforementioned organic solvent include a polyhydric alcohol, a polyhydric alcohol alkyl ether, a nitrogen-containing heterocyclic compound, an amide, an amine, a sulfur-containing compound and the like. Of these organic solvents, preferred is at least one compound selected from the group consisting of a polyhydric alcohol and a polyhydric alcohol alkyl ether, more preferred is at least one compound selected from the group consisting of ethylene glycol, propylene glycol, diethylene glycol, triethylene glycol, polyethylene glycol, glycerin, trimethylolpropane, diethylene glycol diethyl ether and diethylene glycol monoisobutyl ether, and even more preferred is at least one compound selected from the group consisting of propylene glycol and diethylene glycol monoisobutyl ether.

The water-based ink may further contain various additives that may be usually used in water-based inks, such as a fixing assistant such as a dispersion of polymer particles, etc., a humectant, a wetting agent, a penetrant, a surfactant, a viscosity modifier, a defoaming agent, an antiseptic agent, a mildew-proof agent, a rust preventive, etc., if required, and further may be subjected to filtration treatment using a filter, etc.

The contents of the respective components in the water-based ink as well as properties of the ink are as follows.

### (Contents of Respective Components in Water-Based Ink)

The content of the metal in the water-based ink is preferably not less than 1% by mass, more preferably not less than 3% by mass and even more preferably not less than 5% by mass from the viewpoint of enhancing optical density of the water-based ink, and is also preferably not more than 20% by mass, more preferably not more than 17% by mass, even more preferably not more than 15% by mass, further even more preferably not more than 13% by mass and still further even more preferably not more than 11% by mass from the viewpoint of reducing viscosity of the resulting water-based ink upon volatilizing the solvent therefrom and improving storage stability of the water-based ink.

The content of the metal in the water-based ink may be measured by the method described in Examples below.

The total content of the metal and the dispersant B in the water-based ink is preferably not less than 2% by mass, more preferably not less than 5% by mass and even more preferably not less than 7% by mass from the viewpoint of improving fixing properties of the water-based ink, and is also preferably not more than 22% by mass, more preferably not more than 20% by mass, even more preferably not more than 17% by mass, further even more preferably not more than 15% by mass and still further even more preferably not more than 13% by mass from the viewpoint of reducing viscosity of the resulting water-based ink upon volatilizing the solvent therefrom and improving storage stability of the water-based ink.

The total content of the metal and the dispersant B in the water-based ink may be calculated from the content of the metal in the water-based ink and the mass ratio [dispersant B/(dispersant B + metal)] both calculated by the methods described in Examples below.

The content of the organic solvent in the water-based ink is preferably not less than 10% by mass, more preferably not less than 20% by mass and even more preferably not less than 30% by mass, and is also preferably not more than 50% by mass, more preferably not more than 45% by mass and even more preferably not more than 40% by mass, from the viewpoint of improving storage stability of the water-based ink, from the viewpoint of improving ejection stability of the water-based ink when using an ink-jet printing method as the below-mentioned printing method, as well as from the viewpoint of improving fixing properties and optical density of the water- based ink.

The content of water in the water-based ink is preferably not less than 20% by mass, more preferably not less than 30% by mass and even more preferably not less than 40% by mass, and is also preferably not more than 80% by mass, more preferably not more than 70% by mass and even more preferably not more than 60% by mass, from the viewpoint of improving storage stability of the resulting water-based ink as well as fixing properties and optical density thereof.

The mass ratio of the metal to the whole solid components of the water-based ink [metal/(whole solid components of water-based ink)] is preferably not less than 0.3, more preferably not less than 0.5, even more preferably not less than 0.7 and further even more preferably not less than 0.8, and is also preferably not more than 0.98, more preferably not more than 0.96 and even more preferably not more than 0.94, from the viewpoint of improving storage stability of the resulting water-based ink as well as fixing properties and optical density thereof.

### (Properties of Water-Based Ink)

The cumulant average particle size of the metal fine particles (a) in the water-based ink is preferably the same as the average particle size of the metal fine particles in the metal fine particle dispersion. The preferred range of the average particle size of the metal fine particles (a) in the water-based ink is also the same as the preferred range of the average particle size of the metal fine particles in the metal fine particle dispersion.

The viscosity of the water-based ink as measured at 32°C is preferably not less than 2 mPa·s, more preferably not less than 3 mPa•s and even more preferably not less than 5 mPa•s, and is also preferably not more than 12 mPa•s, more preferably not more than 9 mPa•s and even more preferably not more than 7 mPa•s, from the viewpoint of improving storage stability of the resulting water-based ink. The viscosity of the water-based ink may be measured using an E-type viscometer.

The pH value of the water-based ink as measured at 20°C is preferably not less than 7.0, more preferably not less than 7.2 and even more preferably not less than 7.5 from the viewpoint of improving storage stability of the resulting water-based ink, and is also preferably not more than 11, more preferably not more than 10 and even more preferably 9.5 from the viewpoint of improving the resistance of members to the water-based ink and suppressing skin irritation. The pH value of the water-based ink may be measured by an ordinary method.

### [Metallic Printing Method]

In the present invention, it is possible to obtain a metallic printed material on which a metal coating film is formed, by applying the water-based ink onto a printing medium.

The water-based ink is capable of providing a printed material that is excellent in metallic luster, and therefore can be suitably used for metallic printing, in particular, as an ink for flexographic printing, an ink for screen printing, an ink for gravure printing or an ink for ink-jet printing. In particular, from the viewpoint of exhibiting excellent ejection stability, the water-based ink is more preferably used as an ink for ink-jet printing.

In the case of using the water-based ink as an ink for ink-jet printing, the water-based ink may be loaded to a conventionally known ink-jet printing apparatus from which droplets of the ink are ejected onto a printing medium to print characters or images, etc., on the printing medium.

Although the ink-jet printing apparatus may be of either a thermal type or a piezoelectric type, the water-based ink containing the metal fine particle dispersion of the present invention is preferably used as a water-based ink for ink-jet printing using an ink-jet printing apparatus of a piezoelectric type. That is, as the method of applying the aforementioned ink onto the printing medium, there is preferably used the ink-jet printing method.

Examples of the printing medium used in the metallic printing method for printing characters or images thereon using the water-based ink include a high-water absorbing plain paper, a low-water absorbing coated paper and a non-water absorbing resin film. Specific examples of the coated paper include a versatile glossy coated paper, a multi-color foam glossy coated paper, and the like. Among these printing media, preferred is the resin film from the viewpoint of obtaining a printed material that is excellent in metallic luster. As the resin film, preferred is at least one film selected from the group consisting of a polyester film such as a polyethylene terephthalate (PET) film, a polyethylene naphthalate (PEN) film, etc., a polyvinyl chloride film, a polypropylene film and a polyethylene film. As the resin film, there may also be used those substrates subjected to corona treatment.

Examples of generally commercially available products of the resin film include "LUMIRROR T60" (polyester) available from Toray Industries Inc., "TEONEX Q51-A4" (polyethylene naphthalate) available from Teijin Film Solutions Ltd., "PVC80B P" (polyvinyl chloride) available from Lintec Corporation, "DGS-210WH" (polyvinyl chloride) available from Roland DG Corporation, a transparent polyvinyl chloride film "RE-137" (polyvinyl chloride) available from MIMAKI ENGINEERING Co., Ltd., "KINATH KEE 70CA" (polyethylene) available from Lintec Corporation, "YUPO SG90 PAT1" (polypropylene) available from Lintec Corporation, "FOR" and "FOA" (polypropylene) both available from Futamura Chemical Co, Ltd., "BONYL RX" (nylon) available from Kohjin Film & Chemicals Co., Ltd., "EMBLEM ONBC" (nylon) available from UNITIKA Ltd., and the like.

### (Ink-Jet Printing Conditions)

The temperature of the ink-jet print head is preferably not lower than 15°C, more preferably not lower than 20°C and even more preferably not lower than 25°C, and is also preferably not higher than 45°C, more preferably not higher than 40°C and even more preferably not higher than 35°C, from the viewpoint of improving metallic luster of the printed characters or images.

The voltage applied to the ink-jet print head is preferably not less than 5 V, more preferably not less than 10 V and even more preferably not less than 15 V, and is also preferably not more than 40 V, more preferably not more than 35 V and even more preferably not more than 30 V, from the viewpoint of improving printing efficiency, etc.

The drive frequency of the print head is preferably not less than 1 kHz, more preferably not less than 5 kHz and even more preferably not less than 10 kHz, and is also preferably not more than 50 kHz, more preferably not more than 40 kHz and even more preferably not more than 35 kHz, from the viewpoint of improving printing efficiency, etc.

The amount of droplets of the ink ejected is preferably not less than 5 pL and more preferably not less than 10 pL, and is also preferably not more than 30 pL and more preferably not more than 25 pL, as calculated per one ink droplet ejected, from the viewpoint of improving metallic luster of the printed characters or images.

The amount of the ink applied onto the printing medium in terms of a solid content thereof is preferably not less than 0.5 g/m², more preferably not less than 1 g/m² and even more preferably not less than 2 g/m², and is also preferably not more than 20 g/m², more preferably not more than 15 g/m² and even more preferably not more than 10 g/m².

The resolution of the ink-jet printing is preferably not less than 200 dpi and more preferably not less than 300 dpi, and is also preferably not more than 1,000 dpi, more preferably not more than 800 dpi and even more preferably not more than 600 dpi. Meanwhile, the term "resolution" as used in the present specification means the number of dots per inch (2.54 cm) which are formed on the printing medium. For example, the "resolution of 600 dpi" means that when the ink droplets are ejected onto the printing medium using a line print head on which a nozzle row is arranged such that the number of nozzle ports per a length of the nozzle row corresponds to 600 dpi (dots/inch), a corresponding dot row of 600 dpi is formed in the direction perpendicular to a transporting direction of the printing medium, and further when ejecting the ink droplets while moving the printing medium in the transporting direction thereof, the dot row of 600 dpi is also formed on the printing medium along the transporting direction thereof. In the present specification, it is assumed that the value of the resolution in the direction perpendicular to the transporting direction of the printing medium is the same as the value of the resolution in the transporting direction of the printing medium.

### (Heat Treatment)

In the present invention, from the viewpoint of improving metallic luster of the printed characters or images, after applying the aforementioned ink onto the printing medium, it is preferred that the obtained ink coating film on the printing medium is subjected to heat treatment.

By conducting such a heat treatment, it is possible to form a metal coating film that is capable of exhibiting metallic luster by allowing a medium in the coating film of the ink to undergo evaporation to dryness.

The method of conducting the heat treatment is not particularly limited. The heat treatment may be conducted by a method of applying a hot air to a surface of the coating film of the ink on the printing medium to heat the ink, a method of approaching a heater to the surface of the coating film of the ink on the printing medium to heat the ink, a method of bringing a heater into contact with a surface of the printing medium opposed to the surface of the printing medium on which the coating film of the ink is formed, to heat the ink, a method of heating the surface of the coating film of the ink on the printing medium by steam curing using a high-temperature steam under an ordinary pressure or under a high pressure, or the like.

The temperature used upon the heat treatment is preferably lower than the temperature at which the printing medium tends to suffer from deformation.

The heating treatment is conducted under ordinary pressures at a temperature of preferably not lower than 40°C, more preferably not lower than 50°C and even more preferably not lower than 55°C, and also preferably not higher than 90°C, more preferably not higher than 80°C and even more preferably not higher than 70°C, from the viewpoint of improving metallic luster of the printed characters or images. In this case, the heating treatment time is preferably not less than 1 minute, and is also preferably not more than 30 minutes, more preferably not more than 20 minutes, even more preferably not more than 10 minutes and further even more preferably not more than 5 minutes.

### EXAMPLES

In the following Examples and Comparative Examples, the "part(s)" and "%" indicate "part(s) by mass" and "% by mass", respectively, unless otherwise specified.

### (1) Measurement of Number-Average Molecular Weight of Polymer (b)

The number-average molecular weight of the polymer (b) was measured by gel permeation chromatography [GPC apparatus: "HLC-8320GPC" available from Tosoh Corporation; columns: "TSKgel Super AWM-H", "TSKgel Super AW3000" and "TSKgel guard column Super AW-H" all available from Tosoh Corporation; flow rate: 0.5 mL/min] using a solution prepared by dissolving phosphoric acid and lithium bromide in N,N dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the polymer with 10 mL of the aforementioned eluent in a glass vial, stirring the resulting mixture at 25°C for 10 hours with a magnetic stirrer, and then subjecting the mixture to filtration treatment through a syringe filter "DISMIC-13HP PTFE" (0.2 µm) available from Advantec Co., Ltd.

### (2) Measurement of Acid Value of Polymer (b)

The acid value of the polymer (b) was measured by the same method as defined in JIS K 0070 except that only a mixed solvent of ethanol and an ether prescribed as a measuring solvent in JIS K 0070 was replaced with a mixed solvent containing acetone and toluene at a volume ratio [acetone: toluene] of 4:6.

### (3) Measurement of Cumulant Average Particle Size of Metal Fine Particles (a)

A sample to be measured was subjected to cumulant analysis using a laser particle analyzing system "ELS-8000" available from Otsuka Electrics Co., Ltd., to measure a cumulant average particle size of the metal fine particles (a). The measurement was conducted under the conditions including a temperature of 25°C, an angle between incident light and detector of 90° and a cumulative number of 100 times, and a refractive index of water (1.333) was input to the analyzing system as a refractive index of the dispersing medium. The concentration of the sample to be measured was controlled to 5 × 10⁻³% in terms of a solid content thereof.

### (4) Measurement of Solid Content of Metal Fine Particle Dispersion or Water-Based Ink

Sodium sulfate dried to constant weight in a desiccator was weighed in an amount of 10.0 g and charged into a 30 mL polypropylene container (φ: 40 mm; height: 30 mm), and about 1.0 g of a sample to be measured was added to the container. The contents of the container were mixed with each other and then accurately weighed. The resulting mixture was maintained in the container at 105°C for 2 hours to remove volatile components therefrom, and further allowed to stand in a desiccator adjusted to room temperature (25°C) for 15 minutes to measure a mass thereof. The mass of the sample after removing the volatile components therefrom was defined as a mass of solids therein. The solid content of the sample was calculated by dividing the mass of the solids by the mass of the sample initially added.

### (5) Calculation of Mass Ratio [Dispersant B/(Dispersant B + Metal)]

Using a freeze dryer "Model: FDU-2110" available from TOKYO RIKAKIKAI CO., LTD., equipped with a dry chamber "Model: DRC-1000" available from TOKYO RIKAKIKAI CO., LTD., the metal fine particle dispersion or water-based ink obtained in the respective Examples and Comparative Examples was freeze-dried under the drying conditions including operations of freezing at -25°C for 1 hour, pressure reduction at -10°C for 9 hours and pressure reduction at 25°C for 5 hours, in which a vacuum degree of 5 Pa was used, thereby obtaining a dry metal powder.

Using a simultaneous thermogravimetric and differential thermal analyzer (TG/DTA) "STA7200RV" (tradename) available from Hitachi High-Tech Science Corporation, 10 mg of the dry metal powder as a sample to be measured was weighed in an aluminum pan cell, heated from 35°C to 550°C at a temperature rise rate of 10°C/min to measure a reduced mass of the sample under an air flow of 50 mL/min. The reduced mass of the sample as measured in a temperature range of from 35°C to 550°C was defined as a mass of the dispersant B, and a mass of the residue at 550°C was defined as a mass of the metal to calculate a mass ratio [dispersant B/(dispersant B + metal)].

### (6) Calculation of Content of Metal (Metal Concentration) in Metal Fine Particle Dispersion or Water-Based Ink

The content of the metal (metal concentration) in the metal fine particle dispersion or the water-based ink was calculated from the mass ratio [dispersant B/(dispersant B + metal)] obtained in the above item (5) and the solid content of the metal fine particle dispersion obtained in the above item (4).

### Example 1-1

### (Step 1)

A 100 mL glass beaker was charged with 14.4 g of silver nitrate as the metal raw material compound A, 0.8 g of a styrene/*α*-methyl styrene/acrylic acid/maleic acid/alkoxy (polyethylene glycol/polypropylene glycol)acrylate (number of alkyleneoxide units: 32 mol; molar ratio [EO/PO] = 75/25) copolymer [in the form of an absolute dry product (Mn: 4500; acid value: 24 mgKOH/g) of an aqueous solution of the copolymer having a solid content of 40% "DISPERBYK-2015" (tradename; acid value: 10 mgKOH/g) available from BYK Chemie GmbH] as the dispersant B (the absolute dry product is hereinafter also referred to merely "BYK-2015dry"), and 13.2 g of ion-exchanged water as the water-based solvent C, and the contents of the glass beaker were stirred at an ordinary temperature with a magnetic stirrer until they became transparent when visually observed, thereby obtaining a mixed solution (IA-1).

Next, 22.6 g of N,Ndimethylethanolamine (hereinafter also referred to merely as "DMAE") as the reducing agent D was charged into a 100 mL dropping funnel, and then added dropwise to the mixed solution (IA-1) whose temperature was controlled in a water bath at 40°C, over 30 minutes. Thereafter, the resulting reaction solution was stirred for 5 hours while controlling the temperature of the reaction solution in the water both at 40°C, and then air-cooled, thereby obtaining a dark brown liquid containing silver fine particles a1. The thus obtained dark brown liquid was allowed to stand for 1 hour to remove the resulting precipitate therefrom, thereby obtaining a supernatant solution as a silver fine particle dispersion (d1-1). The thus obtained silver fine particle dispersion (d1-1) was subjected to the next step 2.

Meanwhile, the mass obtained by subtracting a mass of the precipitate from a mass of the metal charged was defined as a mass of the metal fine particles (a), and the yield of the metal fine particles (a) was calculated from the mass ratio of the metal fine particles (a) to the metal charged (mass of metal fine particles (a)/mass of metal charged). The results are shown in Table 1.

### (Step 2)

The silver fine particle dispersion (d1-1) obtained above was charged into a dialysis tube "Spectra/Por6" (tradename; dialysis membrane: regenerated cellulose; molecular weight cutoff (MWCO) = 50 K) available from Spectrum Laboratories Inc., and the dialysis tube was hermetically closed with a closer at opposite upper and lower ends thereof. The thus closed dialysis tube was dipped in 5 L of ion-exchanged water filled in a 5 L glass beaker, followed by stirring the dispersion while maintaining a temperature of the water at a temperature of 20 to 25°C for 1 hour. Thereafter, the whole amount of the ion-exchanged water was replaced with new one every one hour, and after the replacement procedure was repeated three times, the dispersion was continuously stirred for 24 hours to complete the dialysis, thereby obtaining a purified silver fine particle dispersion (d2-1).

### (Step 3)

The silver fine particle dispersion (d2-1) obtained above was concentrated at 60°C under reduced pressure such that a solid content thereof was increased to 50%, thereby obtaining a silver fine particle dispersion (D1). The mass ratio [dispersant B/(dispersant B + metal)] and the metal concentration of the silver fine particle dispersion (D1) were measured and calculated by the methods described in the aforementioned items (5) and (6), and the cumulant average particle size X immediately after production of the dispersion (hereinafter also referred to merely as "cumulant average particle size X") was measured by the method described in the aforementioned item (3). The results are shown in Table 2.

### Examples 1-2 and 1-3

The same procedure as in Example 1-1 was repeated except that the amount of water charged in the step 1 was changed to those shown in Table 1, thereby obtaining silver fine particle dispersions (D2) and (D3).

### Examples 1-4 and 1-5

The same procedure as in Example 1-1 was repeated except that the amount of DMAE charged in the step 1 was changed to those shown in Table 1, thereby obtaining silver fine particle dispersions (D4) and (D5).

### Example 1-6

The same procedure as in Example 1-1 was repeated except that the step 1 of Example 1-1 was changed as shown below, thereby obtaining a silver fine particle dispersion (D6).

### (Step 1')

A 100 mL glass beaker was charged with 0.8 g of "BYK-2015dry" as the dispersant B and 22.6 g of DMAE as the reducing agent D, and the contents of the glass beaker were stirred at an ordinary temperature with a magnetic stirrer until they became transparent when visually observed, thereby obtaining a mixed solution (IIA-6).

Next, a mixed solution (IIB-6) prepared by dissolving 14.4 g of silver nitrate as the metal raw material compound A in 13.2 g of ion-exchanged water as the water-based solvent C until crystals of the silver nitrate were visually unobserved was charged into a 100 mL dropping funnel, and then added dropwise to the mixed solution (IIA-6) whose temperature was controlled in a water bath at 40°C, over 30 minutes. Thereafter, the resulting reaction solution was stirred for 5 hours while controlling the temperature of the reaction solution in the water both at 40°C, and then air-cooled, thereby obtaining a dark brown liquid containing silver fine particles a6. The thus obtained dark brown liquid was allowed to stand for 1 hour to remove the resulting precipitate therefrom, thereby obtaining a supernatant solution as a silver fine particle dispersion (d1-6). The thus obtained silver fine particle dispersion (d1-6) was subjected to the same steps as the steps 2 and 3 of Example 1-1.

### Examples 1-7 and 1-8

The same procedure as in Example 1-1 was repeated except that the amount of the silver nitrate charged in the step 1 was changed to those shown in Table 1, thereby obtaining silver fine particle dispersions (D7) and (D8).

### Example 1-9

The same procedure as in Example 1-1 was repeated except that DMAE as the reducing agent D was changed to sodium boron hydride (hereinafter also referred to merely as "NaBH₄"), thereby obtaining a silver fine particle dispersion (D9).

### Comparative Example 1-1

The same procedure as in Example 1-1 was repeated except that cholic acid was used in place of "BYK-2015dry", thereby obtaining a silver fine particle dispersion (DC1).

### Comparative Example 1-2

The same procedure as in Example 1-1 was repeated except that "JONCRYL 69" (tradename; styrene/acrylic acid polymer; hereinafter also referred to merely as "JC69") available from BASF AG was used in place of "BYK-2015dry", thereby obtaining a silver fine particle dispersion (DC2).

### Comparative Example 1-3

The same procedure as in Example 1-1 was repeated except that "MA7323" (tradename; acrylic acid/polyethylene glycol methacylate polymer; hereinafter also referred to merely as "MA7323") available from Kao Corporation was used in place of "BYK-2015dry", thereby obtaining a silver fine particle dispersion (DC3).

### Comparative Example 1-4

The same procedure as in Example 1-1 was repeated except that a mixture of 0.64 g of "BYK-2015dry" and 0.16 g of cholic acid was used in place of 0.8 g of "BYK-2015dry", thereby obtaining a silver fine particle dispersion (DC4).

### <Evaluation of Storage Stability>

A 30 mL glass vial was charged with 10 g of the respective metal fine particle dispersions obtained in the aforementioned Examples and Comparative Examples, and hermetically sealed with a cap, followed by storing the thus charged glass vial in a thermostatic chamber at 70°C for 14 days. Thereafter, the respective metal fine particle dispersions were allowed to stand at an ordinary temperature (25°C) for 1 day to measure a cumulant average particle size Y of the metal fine particles (a) after being stored (hereinafter also referred to merely as a "cumulant average particle size Y") by the same measuring method as that used for measurement of the aforementioned cumulant average particle size X. The ratio of the cumulant average particle size Y to the aforementioned cumulant average particle size X (Y/X) was used as an index of storage stability of the respective metal fine particle dispersions. The results are shown in Table 2. It is indicated that as the ratio (Y/X) became closer to 1, the respective metal fine particle dispersions were enhanced in storage stability.

**TABLE 1 (part 1 of 2)**

| | Production of metal fine particle dispersion | | | | | | | | |
|---|---|---|---|---|---|---|---|---|---|
| | Metal raw material compound A | | Dispersant B | | | Water-based solvent C | | Reducing agent D | |
| | Kind | Amount charged (g) | Kind | Content of polymer (b) (% by mass)*¹ | Amount charged (g) | Kind | Amount charged (g) | Kind | Amount charged (g) |
| Example 1-1 | Silver nitrate | 14.4 | BYK-2015dry | 100 | 0.8 | Water | 13.2 | DMAE | 22.6 |
| Example 1-2 | Silver nitrate | 14.4 | BYK-2015dry | 100 | 0.8 | Water | 6.0 | DMAE | 22.6 |
| Example 1-3 | Silver nitrate | 14.4 | BYK-2015dry | 100 | 0.8 | Water | 22.0 | DMAE | 22.6 |
| Example 1-4 | Silver nitrate | 14.4 | BYK-2015dry | 100 | 0.8 | Water | 13.2 | DMAE | 16.0 |
| Example 1-5 | Silver nitrate | 14.4 | BYK-2015dry | 100 | 0.8 | Water | 13.2 | DMAE | 45.0 |
| Example 1-6 | Silver nitrate | 14.4 | BYK-2015dry | 100 | 0.8 | Water | 13.2 | DMAE | 22.6 |
| Example 1-7 | Silver nitrate | 8.0 | BYK-2015dry | 100 | 0.8 | Water | 13.2 | DMAE | 22.6 |
| Example 1-8 | Silver nitrate | 40.0 | BYK-2015dry | 100 | 0.8 | Water | 13.2 | DMAE | 22.6 |
| Example 1-9 | Silver nitrate | 14.4 | BYK-2015dry | 100 | 0.8 | Water | 13.2 | NaBH₄ | 22.6 |
| Comparative Example 1-1 | Silver nitrate | 14.4 | ( Cholic acid) | 0 | 0.8 | Water | 13.2 | DMAE | 22.6 |
| Comparative Example 1-2 | Silver nitrate | 14.4 | (JC69) | 0 | 0.8 | Water | 13.2 | DMAE | 22.6 |
| Comparative Example 1-3 | Silver nitrate | 14.4 | (MA7323) | 0 | 0.8 | Water | 13.2 | DMAE | 22.6 |
| Comparative Example 1-4 | Silver nitrate | 14.4 | (BYK-2015dry/ cholic acid)*⁴ | 80 | 0.8 | Water | 13.2 | DMAE | 22.6 |

| | | | Amounts of respective components charged (% by mass)*² | | | | Molar ratio of components charged [reducing agent D/compound A] | Method*³ | Yield of metal fine particles (a) (% by mass) |
|---|---|---|---|---|---|---|---|---|---|
| Compound A | Dispersant B | Water-based solvent C | Reducing agent D | | | | | | |
| Example 1-1 | | | 28 | 2 | 26 | 44 | 3.0 | I | 99 |
| Example 1-2 | | | 33 | 2 | 14 | 52 | 3.0 | I | 68 |
| Example 1-3 | | | 24 | 1 | 37 | 38 | 3.0 | I | 65 |
| Example 1-4 | | | 32 | 2 | 30 | 36 | 2.1 | I | 62 |
| Example 1-5 | | | 20 | 1 | 18 | 61 | 6.0 | I | 70 |
| Example 1-6 | | | 28 | 2 | 26 | 44 | 3.0 | II | 61 |
| Example 1-7 | | | 18 | 2 | 30 | 51 | 5.4 | I | 83 |
| Example 1-8 | | | 52 | 1 | 17 | 30 | 1.1 | I | 89 |
| Example 1-9 | | | 28 | 2 | 26 | 44 | 7.1 | I | 85 |
| Comparative Example 1-1 | | | 28 | 2 | 26 | 44 | 3.0 | I | 17 |
| Comparative Example 1-2 | | | 28 | 2 | 26 | 44 | 3.0 | I | 12 |
| Comparative Example 1-3 | | | 28 | 2 | 26 | 44 | 3.0 | I | 29 |
| Comparative Example 1-4 | | | 28 | 2 | 26 | 44 | 3.0 | I | 49 |

Meanwhile, the respective notations shown in Table 1 are as follows.
*1: Content (% by mass) of the polymer (b) in the dispersant B.
*2: Amounts (% by mass) of the respective components charged on the basis of a total amount of the metal raw material compound A, the dispersant B, the water-based solvent C and the reducing agent D charged.
*3: Method I: Method of mixing the mixture IA containing the metal raw material compound A, the dispersant B and the water-based solvent C with the reducing agent D; and
Method II: Method of mixing the mixture IIA containing the dispersant B and the reducing agent D with the mixed solution IIB containing the metal raw material compound A and the water-based solvent C.
*4: Mixture of 80% by mass of "BYK-2015dry" and 20% by mass of cholic acid.

**TABLE 2**

| | Metal fine particle dispersion | | | | | |
|---|---|---|---|---|---|---|
| | No. | Mass ratio [dispersant B/(dispersant B + metal)] | Concentration of metal in metal fine particle dispersion (% by mass) | Cumulant average particle size X (nm) | Cumulant average particle size Y (nm) | Storage stability [ratio (Y/X)] |
| Example 1-1 | D1 | 0.08 | 45 | 25 | 25 | 1.00 |
| Example 1-2 | D2 | 0.08 | 46 | 27 | 29 | 1.07 |
| Example 1-3 | D3 | 0.08 | 46 | 25 | 31 | 1.24 |
| Example 1-4 | D4 | 0.08 | 45 | 31 | 36 | 1.16 |
| Example 1-5 | D5 | 0.08 | 46 | 29 | 30 | 1.03 |
| Example 1-6 | D6 | 0.08 | 46 | 25 | 29 | 1.16 |
| Example 1-7 | D7 | 0.14 | 44 | 25 | 29 | 1.16 |
| Example 1-8 | D8 | 0.03 | 48 | 27 | 28 | 1.04 |
| Example 1-9 | D9 | 0.08 | 46 | 29 | 38 | 1.31 |
| Comparative Example 1-1 | DC1 | 0.08 | 46 | 45 | 132 | 2.93 |
| Comparative Example 1-2 | DC2 | 0.08 | 46 | 36 | 82 | 2.28 |
| Comparative Example 1-3 | DC3 | 0.08 | 45 | 28 | 49 | 1.75 |
| Comparative Example 1-4 | DC4 | 0.08 | 46 | 31 | 81 | 2.61 |

As shown in Tables 1 and 2, it was confirmed that the metal fine particle dispersions of the Examples were produced with a high yield, and the metal fine particles (a) contained therein had a small cumulant average particle size, as compared to those of the Comparative Examples. In addition, it was also confirmed that the metal fine particle dispersions of the Examples were excellent in storage stability, and also excellent in dispersion stability of the metal fine particles therein even when the metal fine particles were contained in the dispersions at a high concentration, as compared to the metal fine particle dispersions obtained in the Comparative Examples.

On the other hand, it was confirmed that in Comparative Example 1 in which the metal fine particles were dispersed with cholic acid as a low-molecular weight dispersant, and in Comparative Examples 2 and 3 in which no polymer (b) containing all of the constitutional units derived from the monomers (b-1) to (b-3) was contained as the dispersant, the yield of the metal fine particles (a) was low, and the cumulant average particle size of the metal fine particles (a) was large in some cases, so that the resulting metal fine particle dispersions were deteriorated in storage stability.

In addition, in Comparative Example 4, although the polymer (b) containing all of the constitutional units derived from the monomers (b-1) to (b-3) was used as the dispersant, since the polymer (b) was used in combination with cholic acid such that the content of the polymer (b) in the dispersant B was as low as less than 85% by mass, the metal fine particles (a) were deteriorated in dispersion stability, and the yield of the metal fine particles (a) was low, so that it was confirmed that the resulting metal fine particle dispersion was deteriorated in storage stability.

### <Metallic printing Ink>

### Example 2-1

The metal fine particle dispersion (D1) obtained in Example 1-1 was compounded such that a whole amount of the resulting ink was 30 g, and a content of the metal in the ink was 10%. The dispersion (D1) was further mixed with the respective components such that a content of propylene glycol in the resulting mixture was 35%, a content of diethylene glycol monoisobutyl ether (iBDG) in the mixture was 1%, a content of a polyether-modified silicone surfactant "KF-6011" (tradename; PEG-11 methyl ether dimethicone) available from Shin-Etsu Chemical Co., Ltd., in the mixture was 0.5%, a content of an acetylene glycol-based surfactant "SURFYNOL 104" (tradename; 2,4,7,9-tetramethyl-5-decyne-4,7-diol; active ingredient content: 100%) available from Evonik Industries AG, in the mixture was 0.5%, and the balance was ion-exchanged water, thereby preparing an ink 1.

Meanwhile, the aforementioned preparation procedure was conducted by charging the respective components into a 50 mL glass vial while stirring with a magnetic stirrer. Thereafter, the resulting mixture was subjected to filtration treatment using a 25 mL-capacity needleless syringe available from Terumo Corporation fitted with a 5 µm-pore size membrane filter "Minisart" (tradename) available from Sartorius Inc., thereby obtaining the ink 1.

### Examples 2-2 to 2-9 and Comparative Examples 2-1 to 2-4

The same procedure as in Example 2-1 was repeated except that the metal fine particle dispersion (D1) used in Example 2-1 was replaced with each of the metal fine particle dispersions (D2) to (D9) and (DC1) to (DC4) obtained in Examples 1-2 to 1-9 and Comparative Examples 1-1 to 1-4, respectively, thereby obtaining inks 2 to 9 and C1 to C4.

### <Metallic Printing>

Using the thus obtained inks 1 to 9 and C1 to C4, metallic printing was conducted by the following method. In addition, the inks were evaluated for ejection stability thereof by the following evaluation method. The results are shown in Table 3.

Under the environmental conditions of a temperature of 25±1°C and a relative humidity of 30±5%, the respective inks obtained in the aforementioned Examples and Comparative Examples were loaded into an ink-jet print evaluation apparatus available from Trytech Co., Ltd., equipped with an ink-jet print head "KJ4B-QA06NTB-STDV" (tradename; piezoelectric type; number of nozzles: 2,656) available from Kyocera Corporation.

The operating conditions of the print evaluation apparatus and the print head were set to a head applied voltage of 26 V, a drive frequency of 20 kHz, an ejected ink droplet amount of 18 pL, a head temperature of 32°C, a resolution of 600 dpi, the number of ink shots for flushing before being ejected of 200 shots and a negative pressure of -4.0 kPa, and a printing medium was fixed on a transportation table under reduced pressure such that the longitudinal direction of the printing medium was aligned with a transportation direction thereof. A printing command was transmitted to the aforementioned print evaluation apparatus to eject and adhere the ink onto the printing medium at Duty 100%, and then heat and dry the ink on the printing medium on a hot plate at 60°C for 2 minutes, thereby obtaining a metallic printed material.

Meanwhile, as the printing medium, there was used a polyester film "LUMIRROR T60" (tradename; thickness: 75 µm: water absorption: 2.3 g/m²) available from Toray Industries Inc.

The aforementioned water absorption was measured using an automatic scanning absorptometer, for example, "KM500win" (tradename) available from Kumagai Riki Kogyo Co., Ltd., in terms of an amount of pure water transferred to the printing medium when contacting the printing medium with pure water for 100 milliseconds at 23°C under a relative humidity of 50%.

### <Evaluation of Ejection Stability>

After carrying out the printing operation using the aforementioned ink-jet printing evaluation apparatus, the ink-jet print head was allowed to stand for 30 minutes without protecting an ink-jet nozzle face thereof. Then, a print check pattern that was capable of judging ejection or non-ejection of the ink from all of nozzles was printed on a printing medium, and the number of missing nozzles (corresponding to the number of clogged nozzles from which no ink could be normally ejected) was counted to evaluate ejection stability of the ink. The less the number of the missing nozzles becomes, the more excellent the ejection stability of the ink is.

**TABLE 3**

| | Metal fine particle dispersion | Ink | |
|---|---|---|---|
| | No. | No. | Ejection stability (number of missing nozzles) |
| Example 2-1 | D1 | 1 | 0 |
| Example 2-2 | D2 | 2 | 10 |
| Example 2-3 | D3 | 3 | 15 |
| Example 2-4 | D4 | 4 | 14 |
| Example 2-5 | D5 | 5 | 10 |
| Example 2-6 | D6 | 6 | 15 |
| Example 2-7 | D7 | 7 | 7 |
| Example 2-8 | D8 | 8 | 2 |
| Example 2-9 | D9 | 9 | 5 |
| Comparative Example 2-1 | DC1 | C1 | 35 |
| Comparative Example 2-2 | DC2 | C2 | 33 |
| Comparative Example 2-3 | DC3 | C3 | 41 |
| Comparative Example 2-4 | DC4 | C4 | 40 |

As shown in Table 3, it was confirmed that the inks obtained in the Examples were excellent in ejection stability as compared to those inks obtained in the Comparative Examples.

### Industrial Applicability

The metal fine particle dispersion of the present invention contains metal fine particles finely dispersed therein at a high concentration and is excellent in storage stability, and therefore can be suitably used for metallic printing in various application fields.

## Claims

1. A water-based metal fine particle dispersion, comprising metal fine particles (a) dispersed with a dispersant B, in which:
the dispersant B comprises a vinyl-based polymer (b) comprising a constitutional unit derived from a hydrophobic monomer (b-1), a constitutional unit derived from a carboxy group-containing monomer (b-2) and a constitutional unit derived from a polyalkylene glycol segment-containing monomer (b-3), in an amount of not less than 85% by mass;
the metal fine particles (a) have a cumulant average particle size of not less than 2 nm and not more than 50 nm wherein cumulant average particle size is measured using a laser particle analyzing system, where the measurement is conducted at 25°C using an angle between incident light and detector of 90° and a cumulative number of 100 times, wherein the refractive index of water (1.333) is input to the analyzing system as the refractive index of the dispersing medium, and wherein the concentration of the sample to be measured is controlled to be 5 x 10⁻³% by mass in terms of a solid content thereof;
a concentration of metal in the water-based metal fine particle dispersion is not less than 30% by mass and not more than 80% by mass; and
a mass ratio of the dispersant B to a sum of the dispersant B and the metal [dispersant B/(dispersant B + metal)] is not less than 0.01 and not more than 0.3.

2. The water-based metal fine particle dispersion according to claim 1, wherein the cumulant average particle size of the metal fine particles (a) is not less than 15 nm and not more than 50 nm.

3. The water-based metal fine particle dispersion according to claim 1 or 2, wherein the metal constituting the metal fine particles (a) is silver.

4. A process for producing the water-based metal fine particle dispersion according to any one of claims 1 to 3, the process comprising reducing a metal raw material compound A comprising the metal constituting the metal fine particles (a) in a water-based solvent C in the presence of the dispersant B.

5. A process for producing the water-based metal fine particle dispersion according to claim 4, comprising the step 1 of mixing a mixed solution IA comprising a metal raw material compound A comprising the metal constituting the metal fine particles (a), the dispersant B and a water-based solvent C, with a reducing agent D.

6. The process for producing the water-based metal fine particle dispersion according to claim 5, wherein an amount of the water-based solvent C charged on the basis of a total amount of the metal raw material compound A, the dispersant B, the water-based solvent C and the reducing agent D charged is not less than 10% by mass and not more than 40% by mass.

7. The process for producing the water-based metal fine particle dispersion according to claim 5 or 6, wherein an amount of the metal raw material compound A charged on the basis of the total amount of the metal raw material compound A, the dispersant B, the water-based solvent C and the reducing agent D charged is not less than 10% by mass and not more than 60% by mass.

8. The process for producing the water-based metal fine particle dispersion according to any one of claims 5 to 7, wherein a molar ratio of the reducing agent D charged to the metal raw material compound A charged [reducing agent D/metal raw material compound A] is not less than 0.5 and not more than 10.

9. The process for producing the water-based metal fine particle dispersion according to any one of claims 5 to 8, wherein the reducing agent D is an amine.

10. The process for producing the water-based metal fine particle dispersion according to any one of claims 4 to 9, wherein the metal raw material compound A is silver nitrate.

11. A metallic printing ink comprising the water-based metal fine particle dispersion according to any one of claims 1 to 3.

12. The metallic printing ink according to claim 11, further comprising an organic solvent.

13. A metallic printing method comprising the step of printing characters or images on a resin film using the metallic printing ink according to claim 11 or 12.

14. The metallic printing method according to claim 13, wherein a method of printing the characters or images on the resin film is an ink-jet printing method.

15. A use of the water-based metal fine particle dispersion according to any one of claims 1 to 3 as a metallic printing ink.

## Patentansprüche

1. Wasserbasierte Dispersion von Metallfeinpartikeln, umfassend Metallfeinpartikel (a), die mit einem Dispergiermittel B dispergiert sind, worin:
das Dispergiermittel B ein vinylbasiertes Polymer (b), umfassend eine Struktureinheit, die von einem hydrophoben Monomer (b-1) abgeleitet ist, eine Struktureinheit, die von einem Carboxygruppen-haltigen Monomer (b-2) abgeleitet ist, und eine Struktureinheit, die von einem Polyalkylenglycolsegment-haltigen Monomer (b-3) abgeleitet ist, in einer Menge von nicht weniger als 85 Massen-% umfasst;
die Metallfeinpartikel (a) eine kumulative durchschnittliche Partikelgröße von nicht weniger als 2 nm und nicht mehr als 50 nm aufweisen, wobei die kumulative durchschnittliche Partikelgröße unter Verwendung eines Laser-Partikelanalysesystems gemessen wird, wobei die Messung bei 25°C unter Verwendung eines Winkels zwischen einfallendem Licht und Detektor von 90° und einer kumulativen Anzahl von 100 Malen durchgeführt wird, wobei der Brechungsindex von Wasser (1,333) als Brechungsindex des Dispersionsmediums in das Analysesystem eingegeben wird, und wobei die Konzentration der zu messenden Probe auf 5 x 10⁻³ Massen-% in Form des Feststoffgehalts davon eingestellt wird;
eine Metallkonzentration in der wasserbasierten Dispersion von Metallfeinpartikeln nicht weniger als 30 Massen-% und nicht mehr als 80 Massen-% beträgt; und das Massenverhältnis von dem Dispergiermittel B zu der Summe des Dispergiermittels B und des Metalls [Dispergiermittel B/(Dispergiermittel B + Metall)] nicht weniger als 0,01 und nicht mehr als 0,3 beträgt.

2. Wasserbasierte Dispersion von Metallfeinpartikeln gemäß Anspruch 1, wobei die kumulative durchschnittliche Partikelgröße der Metallfeinpartikel (a) nicht weniger als 15 nm und nicht mehr als 50 nm beträgt.

3. Wasserbasierte Dispersion von Metallfeinpartikeln gemäß Anspruch 1 oder 2, wobei das Metall, das die Metallfeinpartikel (a) bildet, Silber ist.

4. Verfahren zur Herstellung der wasserbasierten Dispersion von Metallfeinpartikeln gemäß einem der Ansprüche 1 bis 3, wobei das Verfahren das Reduzieren einer Metallausgangsmaterialverbindung A, die das Metall, das die Metallfeinpartikel (a) bildet, umfasst, in einem wasserbasierten Lösungsmittel C in Gegenwart des Dispersionsmittels B umfasst.

5. Verfahren zur Herstellung der wasserbasierten Dispersion von Metallfeinpartikeln gemäß Anspruch 4, umfassend den Schritt 1 des Mischens einer gemischten Lösung IA, die eine Metallausgangsmaterialverbindung A, umfassend das Metall, das die Metallfeinpartikel (a) bildet, das Dispersionsmittel B und ein wasserbasiertes Lösungsmittel C umfasst, mit einem Reduktionsmittel D.

6. Verfahren zur Herstellung der wasserbasierten Dispersion von Metallfeinpartikeln gemäß Anspruch 5, wobei die zugegebene Menge des wasserbasierten Lösungsmittels C bezogen auf die zugegebene Gesamtmenge der Metallausgangsmaterialverbindung A, des Dispergiermittels B, des wasserbasierten Lösungsmittels C und des Reduktionsmittels D nicht weniger als 10 Massen-% und nicht mehr als 40 Massen-% beträgt.

7. Verfahren zur Herstellung der wasserbasierten Dispersion von Metallfeinpartikeln gemäß Anspruch 5 oder 6, wobei die zugegebene Menge der Metallausgangsmaterialverbindung A bezogen auf die zugegebene Gesamtmenge der Metallausgangsmaterialverbindung A, des Dispergiermittels B, des wasserbasierten Lösungsmittels C und des Reduktionsmittels D nicht weniger als 10 Massen-% und nicht mehr als 60 Massen-% beträgt.

8. Verfahren zur Herstellung der wasserbasierten Dispersion von Metallfeinpartikeln gemäß einem der Ansprüche 5 bis 7, wobei das Molverhältnis von dem zugegebenen Reduktionsmittel D zu der zugegebenen Metallausgangsmaterialverbindung A [Reduktionsmittel D/ Metallausgangsmaterialverbindung A] nicht weniger als 0,5 und nicht mehr als 10 beträgt.

9. Verfahren zur Herstellung der wasserbasierten Dispersion von Metallfeinpartikeln gemäß einem der Ansprüche 5 bis 8, wobei das Reduktionsmittel D ein Amin ist.

10. Verfahren zur Herstellung der wasserbasierten Dispersion von Metallfeinpartikeln gemäß einem der Ansprüche 4 bis 9, wobei die Metallausgangsmaterialverbindung A Silbernitrat ist.

11. Metalldrucktinte, umfassend die wasserbasierte Dispersion von Metallfeinpartikeln gemäß einem der Ansprüche 1 bis 3.

12. Metalldrucktinte gemäß Anspruch 11, ferner umfassend ein organisches Lösungsmittel.

13. Metalldruckverfahren, umfassend den Schritt des Druckens von Zeichen oder Bildern auf einen Harzfilm unter Verwendung der Metalldrucktinte gemäß Anspruch 11 oder 12.

14. Metalldruckverfahren gemäß Anspruch 13, wobei ein Verfahren zum Drucken von Zeichen oder Bildern auf den Harzfilm ein Tintenstrahldruckverfahren ist.

15. Verwendung der wasserbasierten Dispersion von Metallfeinpartikeln gemäß einem der Ansprüche 1 bis 3 als Metalldrucktinte.

## Revendications

1. Dispersion de particules fines métalliques à base d'eau, comprenant des particules fines métalliques (a) dispersées dans un dispersant B, dans laquelle :
le dispersant B comprend un polymère à base de vinyle (b) comprenant un motif constitutionnel dérivé d'un monomère hydrophobe (b-1), un motif constitutionnel dérivé d'un monomère contenant un groupe carboxy (b-2) et un motif constitutionnel dérivé d'un monomère contenant un segment de polyalkylène glycol (b-3), en une quantité de pas moins de 85 % en masse ;
les particules fines métalliques (a) présentent une taille de particule moyenne cumulée de pas moins de 2 nm et de pas plus de 50 nm, dans laquelle la taille de particule moyenne cumulée est mesurée en utilisant un système d'analyse de particule laser, la mesure est effectuée à 25 °C en utilisant un angle entre la lumière incidente et le détecteur de 90° et un nombre cumulé de 100 fois, l'indice de réfraction d'eau (1,333) est entré dans le système d'analyse en tant qu'indice de réfraction du milieu de dispersion, et la concentration de l'échantillon à mesurer est commandée pour être 5 x 10⁻³% en masse en termes d'une teneur en solides de celui-ci ;
une concentration de métal dans la dispersion de particules fines métalliques à base d'eau n'est pas moins de 30 % en masse et pas plus de 80 % en masse ; et
un rapport massique du dispersant B sur une somme du dispersant B et du métal [dispersant B/(dispersant B + métal)] n'est pas moins de 0,01 et pas plus de 0,3.

2. Dispersion de particules fines métalliques à base d'eau selon la revendication 1, dans laquelle la taille de particule moyenne cumulée des particules fines métalliques (a) n'est pas moins de 15 nm et pas plus de 50 nm.

3. Dispersion de particules fines métalliques à base d'eau selon la revendication 1 ou la revendication 2, dans laquelle le métal constituant les particules fines métalliques (a) est de l'argent.

4. Procédé de production de la dispersion de particules fines métalliques à base d'eau selon l'une quelconque des revendications 1 à 3, le procédé comprenant le fait de réduire un composé A de matière première métallique comprenant le métal constituant les particules fines métalliques (a) dans un solvant à base d'eau C en présence du dispersant B.

5. Procédé de production de la dispersion de particules fines métalliques à base d'eau selon la revendication 4, comprenant l'étape 1 consistant à mélanger une solution mélangée IA comprenant un composé de matière première métallique A comprenant le métal constituant les particules fines métalliques (a), le dispersant B et un solvant à base d'eau C, avec un agent de réduction D.

6. Procédé de production de la dispersion de particules fines métalliques à base d'eau selon la revendication 5, dans lequel une quantité du solvant à base d'eau C chargé sur la base d'une quantité totale du composé de matière première métallique A, du dispersant B, du solvant à base d'eau C et de l'agent de réduction D chargés n'est pas moins de 10 % en masse et pas plus de 40 % en masse.

7. Procédé de production de la dispersion de particules fines métalliques à base d'eau selon la revendication 5 ou la revendication 6, dans lequel une quantité du composé de matière première métallique A chargé sur la base de la quantité totale du composé de matière première métallique A, du dispersant B, du solvant à base d'eau C et de l'agent de réduction D chargés n'est pas moins de 10 % en masse et pas plus de 60 % en masse.

8. Procédé de production de la dispersion de particules fines métalliques à base d'eau selon l'une quelconque des revendications 5 à 7, dans lequel un rapport molaire de l'agent de réduction D chargé sur le composé de matière première métallique A chargé [agent de réduction D/composé de matière première métallique A] n'est pas moins de 0,5 et pas plus de 10.

9. Procédé de production de la dispersion de particules fines métalliques à base d'eau selon l'une quelconque des revendications 5 à 8, dans lequel l'agent de réduction D est une amine.

10. Procédé de production de la dispersion de particules fines métalliques à base d'eau selon l'une quelconque des revendications 4 à 9, dans lequel le composé de matière première métallique A est du nitrate d'argent.

11. Encre d'impression métallique comprenant la dispersion de particules fines métalliques à base d'eau selon l'une quelconque des revendications 1 à 3.

12. Encre d'impression métallique selon la revendication 11, comprenant en outre un solvant organique.

13. Procédé d'impression métallique comprenant l'étape consistant à imprimer des caractères ou images sur un film de résine à l'aide de l'encre d'impression métallique selon la revendication 11 ou la revendication 12.

14. Procédé d'impression métallique selon la revendication 13, dans lequel un procédé d'impression des caractères ou images sur le film de résine est un procédé d'impression à jet d'encre.

15. Utilisation de la dispersion de particules fines métalliques à base d'eau selon l'une quelconque des revendications 1 à 3 en tant qu'encre d'impression métallique.
